# EUROPEAN PATENT APPLICATION

(11) **EP 2 393 055 A1**
(43) Date of publication of application: **07.12.2011**
(21) Application number: 11250570.6
(22) Date of filing: 28.05.2011
(51) Int. Cl.: G06Q 10/00, H04L 29/06

(54) **Embedded communication system for refrigerated transportation containers**

(30) Priority: 01.06.2010 US 791411
(71) Applicant: THERMO KING CORPORATION, Minnepolis, MN 55420 (US)
(72) Inventor: Walker, Timothy A., Plymouth Minnesota 55446 (US); Tan, Eduardo S., Chaska Minnesota 55318 (US); Fink, Ulrich, Maple Grove Minnesota 55369 (US)
(74) Representative: Holmes, Matthew Peter

(57) **Abstract**

A communication system for a climate-controlled container. The system includes a controller and a radio expansion module removably connected to the controller. The controller is coupled to the refrigerated container and configured to monitor a status of the refrigerated container. The radio expansion module is configured to support a communication mode, and to communicate the status to a remote system. The communication mode used to communicate with the remote system is determined by the controller based on the communication modes supported by the radio expansion module.

## Description

### FIELD OF THE INVENTION

The invention relates to communication systems for refrigerated transportation containers.

### BACKGROUND

Climate-controlled transportation containers, such as refrigerated trailers, refrigerated containers, and refrigerated trucks, are used for transporting goods that must be kept below a certain temperature to prevent spoilage. Often the refrigerated transportation containers monitor the status of environmental conditions of the container and communicate the status to a remote location along with other information, such as the location of the container. Because different fleet operators have different communication preference and/or needs, manufacturers of refrigerated transportation containers must customize the containers for each fleet operator to meet the individual communication needs of the operator.

### SUMMARY

In one embodiment, the invention provides a communication system for a climate-controlled container. The system includes a controller and a radio expansion module removably connected to the controller. The controller is coupled to the climate-controlled container and configured to monitor a status of the refrigerated container. The radio expansion module is configured to support a communication mode, and to communicate the status to a remote system. The communication mode used to communicate with the remote system is determined by the controller based on the communication modes supported by the radio expansion module.

In another embodiment the invention provides a communication system including a controller, a first radio expansion module, and a second radio expansion module. The controller is coupled to a device to be monitored, and is configured to monitor a status of the device. The first radio expansion module is configured to be removably connected to the controller, and to communicate the status to a remote system via a first communication mode. The second radio expansion module is configured to be removably connected to the controller, and to communicate the status to the remote system via a second communication mode.

In another embodiment the invention provides a method of communicating by a communication controller with a remote system. The method includes the acts of connecting to a removable radio expansion module populated with a plurality of circuits for communicating, obtaining data from a device external to the communication controller, determining a communication mode to use to send the data to the remote system, and sending the data to the remote system via the radio expansion module using the determined communication mode. Each of the plurality of circuits for communicating provides a different communication mode.

In another embodiment the invention provides a communication system for a climate-controlled container. The system includes a controller and a radio expansion module. The controller is coupled to the climate-controlled container and is configured to monitor a status of the refrigerated container. The radio expansion module is removably connected to the controller and is configured to support a plurality of communication modes including at least two of cellular, satellite, and WiFi. The radio expansion module is also configured to communicate the status to a remote system. When a WiFi communication link is available, and the radio expansion module is configured to support a WiFi communication mode, the controller communicates with the remote system via a WiFi communication link. When a WiFi communication link is not available, or the radio expansion board is not configured to support a WiFi communication mode, and a cellular communication link is available, and the radio expansion board is configured to support a cellular communication mode, the controller communicates with the remote system via a cellular communication.

Other aspects of the invention will become apparent by consideration of the detailed description and accompanying drawings.

### BRIEF DESCRIPTION OF THE DRAWINGS

Fig. 1 is an illustration of a variety of communication links available for use by constructions of a configurable communication system.

Fig. 2 is a block diagram of a configurable communication system.

Fig. 3 is a block diagram of a radio expansion module of the configurable communication system of Fig. 3.

Fig. 4 is a flow diagram of an operation of the configurable communication system of Fig. 3 for communicating to a remote system.

Fig. 5 is a flow diagram of an operation of an exemplary remote system for communicating to a refrigerated container having a configurable communication system.

### DETAILED DESCRIPTION

Before any embodiment of the invention are explained in detail, it is to be understood that the invention is not limited in its application to the details of construction and the arrangement of components set forth in the following description or illustrated in the following drawings. The invention is capable of other embodiment and of being practiced or of being carried out in various ways.

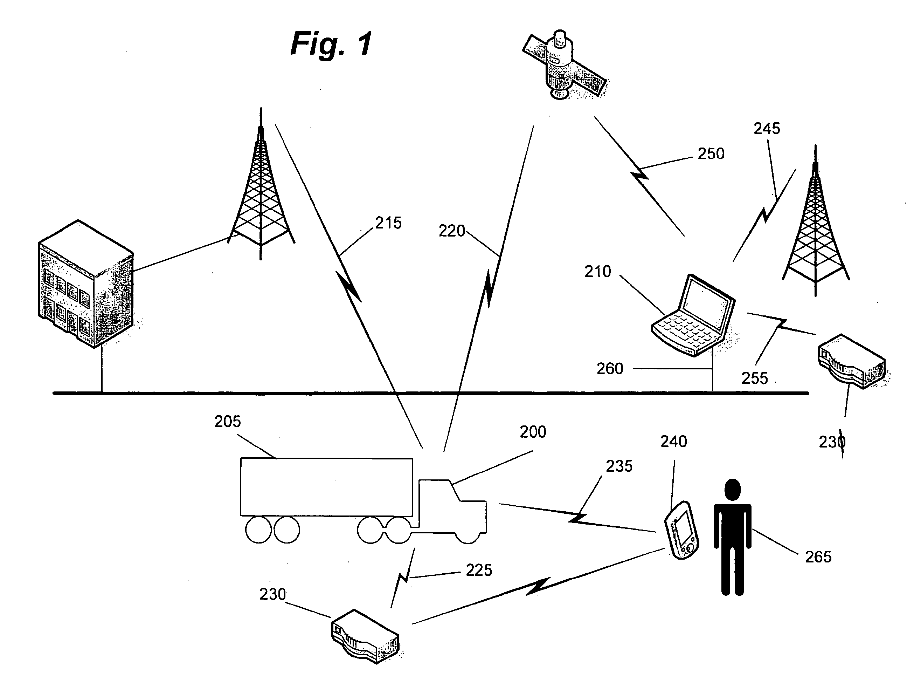

Fig. 1 shows a semi-trailer truck 200 with a refrigerated trailer 205 which is monitored and controlled by a remote system 210 (e.g., a workstation). The remote system 210 receives data from the refrigerated trailer 205 either by polling the refrigerated trailer 205, by unsolicited communication from the refrigerated trailer 205 (e.g., on a timed basis or as a result of an alarm condition), or both.

The refrigerated trailer 205 is equipped with a configurable communication system, and can use one or more communication modes to communicate with the remote system 210. For example, the trailer 205 can communicate via a cellular link 215, a satellite link 220, a WiFi link 225 (e.g., via a router 230), a wireless personal area network (WPAN) link 235 (e.g., to a personal data assistant 240), or other suitable communication link. The remote system 210 can communicate via a cellular link 245, a satellite link 250, a WiFi link 255, a land-line telephone link 260, or other suitable communication methods including links not shown, such as a direct connection (e.g., RS232), an infrared link, a radio frequency (RF) link, and other third-party telematics links.

The trailer 205, via the configurable communication system, determines which communication mode to use based on a criterion. Potential criteria include signal strength, cost, integrity of the mode, and security of the mode. For example, a refrigerated trailer 205 with a configurable communication system that is configured to use cellular, satellite, and WiFi communication modes, can select cellular communication when on the road in an area having cellular service (i.e., when a cellular link is available), cellular communication being generally cheaper than satellite communication. However, should the trailer 205 be loaded on a barge that is at sea, cellular communication would not be available; therefore, the trailer 205 would communicate using satellite communication. Further, when the trailer 205 is located at a terminal, the trailer 205 would communicate using WiFi because there would be no charges associated with the WiFi communication. However, if the communication included sensitive information, and the WiFi system is unsecured, the trailer 205 could communicate using an alternative communication mode. In addition, a user 265 could communicate with the trailer 205 using the WiFi communication via a personal data assistant 240 (e.g., through a wireless router 230).

Data that the system 210 receives from the refrigerated trailer 205 includes, but is not limited to, the trailer's present position, a speed of the trailer, a temperature set point in the trailer, a return air temperature, a discharge air temperature, an operating mode, a unit mode, an alarm status, an hours of operation indication, a fuel quantity, a fuel consumption rate and total, a status of a door, a battery voltage, and other sensed information. Commands that are sent from the system 210 to the refrigerated trailer 205 include, but are not limited to, changing a temperature set point, resetting an alarm, and reprogramming a flash memory (the command can include a program to replace the program presently running in the configurable communication system).

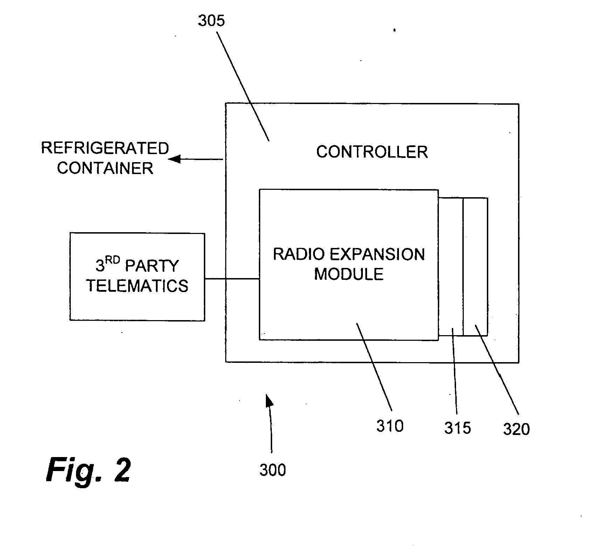

Fig. 2 shows a block diagram of a construction of a configurable communication system 300 for a refrigerated transport container (e.g., a refrigerated trailer). The configurable communication system 300 includes a controller 305 and a radio expansion module 310. The radio expansion module 310 is removably connected to the controller 305. That is the radio expansion module 310 can be easily (or readily) removed and replaced by another radio expansion module 310. In some constructions, the radio expansion module 310 is held in place by one or more fasteners (e.g., screws). In some constructions, the radio expansion module 310 includes a spring biased latch to hold the radio expansion module 310 in place. Other methods of securing the radio expansion module 310 in place are also contemplated. The radio expansion module 310 has a connector 315 (e.g., a card edge connector) for connecting to a receiver 320 of the controller 305. In some constructions, the radio expansion module conforms to the PCMCIA specification. The invention contemplates other methods of connecting the radio expansion module 310 to the controller as well including, but not limited to, a socket, a cable (e.g., USB, RS232, etc.), etc. When installed, the radio expansion module 310 is held in place such that it will not separate from the controller 305 when the container is being transported. However, an operator can remove the radio expansion module 310 from the controller 305 and replace the radio expansion module 310 with another radio expansion module 310 (e.g., to replace a faulty radio expansion module 310 or to install a radio expansion module 310 having different capabilities).

The controller 305 is connected to a refrigeration unit of the container. The refrigeration unit controls the environment inside the container. In some constructions, the system 300 includes a global positioning system (GPS). The GPS can be included in the controller 305, the radio expansion module 310, or the refrigerated trailer 205. The controller 305 receives power from the refrigeration unit and monitors the status of the refrigeration unit and the container. In some embodiments, information received from the refrigeration unit and/or container includes the present position of the container, a speed of travel of the container, a temperature set point of the container, a return air indication (e.g., volume, temperature, etc.), a discharge air indication, an operating mode of the refrigeration unit, alarm indications, an hour meter indication, refrigeration unit and/or container sensor data, a fuel quantity of the refrigeration unit, a fuel consumption indication, a container door status, a voltage level of one or more batteries of the refrigeration unit, etc.

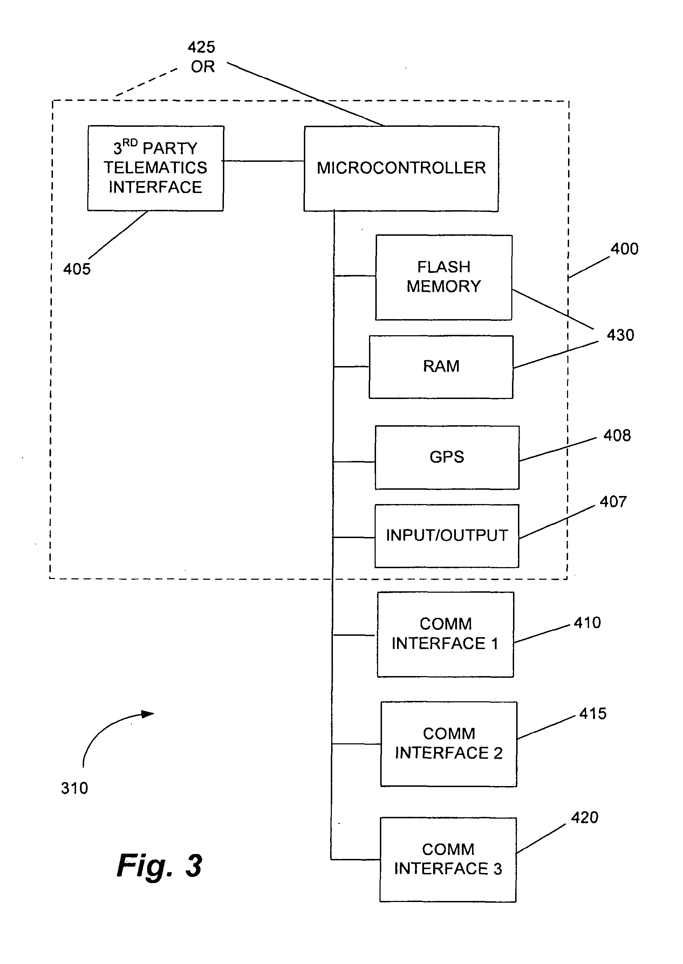

Fig. 3 shows a block diagram of a construction of the radio expansion module 310. The module 310 includes a processing circuit 400, a third-party telematics interface 405 (e.g., a USB interface, an RS232 interface, a RS422 interface, etc.), an input/output circuit 407 (e.g., digital and/or analog), a global positioning system circuit (GPS) 408, and one or more communication circuits such as a first communication circuit 410, a second communication circuit 415, and a third communication circuit 420. The processing circuit 400 includes a processor 425 (e.g., a microprocessor, microcontroller, ASIC, DSP, etc.) and memory 430 (e.g., flash, ROM, RAM, EEPROM, etc.), which can be internal to the processor 425, external to the processor 425, or a combination thereof. In some constructions, the processor 425 includes the input/output circuit 407 and/or the GPS 408. The first, second, and third communication circuits 410, 415, and 420 provide the communication system 300 with communication capabilities such as cellular, satellite, WiFi, RS232, WPAN, infrared, radio frequency (RF), etc. In the construction shown, each radio expansion module 310 is configured with up to three communication modes. If less than three communication modes are required, one or more of the communication circuits 410, 415, and 420 are not populated. The communication circuits 410, 415, and 420 can include an embedded antenna or can be coupled to an external antenna. In some constructions, two or more communication circuits share an external antenna.

In some constructions, sensors in the container 205 are wired to the input/output circuit 407. The processor 425 receives indications of the status of various elements of the container (e.g., whether a door of the container 205 is open or closed) from the sensors.

In some constructions, one of the communication circuits is populated to communicate with a WPAN (e.g., via Bluetooth). The WPAN communicates with devices near or in the container 205, and retrieves information from various sensors, and switches, such as the status of doors (e.g., a fuel door). In some constructions, the personal area network provides information to a human machine interface in a driver's compartment of a truck (e.g., showing the temperature of the container, fuel level, alarms, etc.).

In some embodiments, the communication circuit functions as a web server and provides data via the Internet. Also, in some embodiments, the communication system 300 may communicate with the remote system 210 via multiple communication modes simultaneously (e.g., to communicate a critical alarm condition).

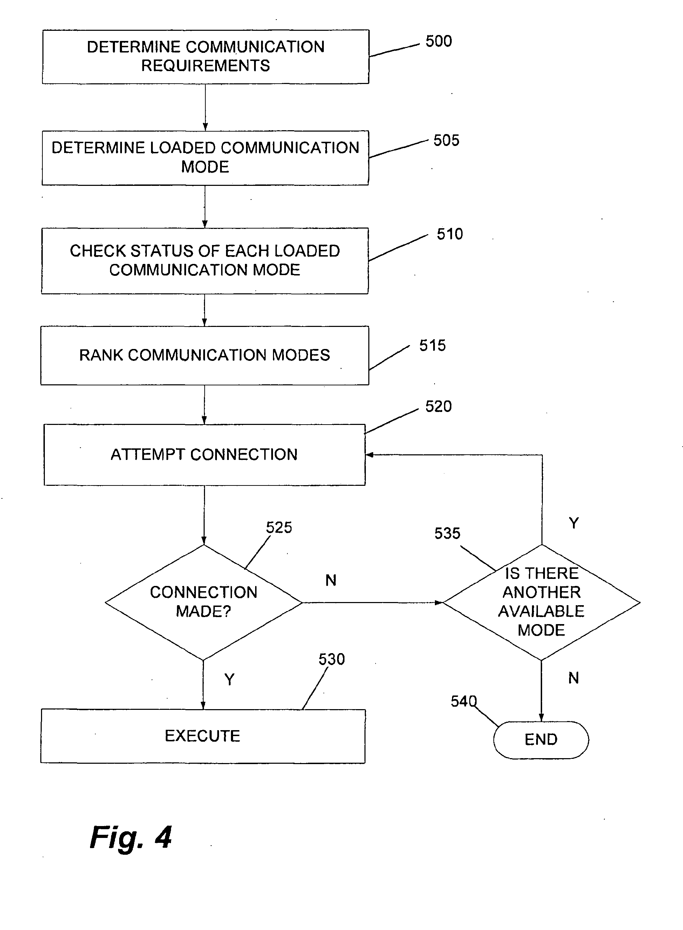

Fig. 4 shows an operation for a trailer 205 initiating communication with a remote system 210 (e.g., to send a status update or an alarm). The controller 305 of the trailer 205 analyzes the communication that is taking place to determine the communication requirements (step 500). For instance, the controller 305 determines if the communication includes sensitive data, the size of the communication packets, the importance of the data, etc., and then determines what communication links are acceptable for the data. Next, the controller 305 determines what communication modes are available (i.e., populated) on the radio expansion module 310 (step 505), and the status of each loaded communication mode (step 510). For example, the radio expansion module 310 determines the availability and signal strength for each available mode, providing that information to the controller 305. The controller 305 and the radio expansion module 310 can also track the various signals to determine the likelihood of losing a connection. Based on the communication taking place and the status of the various modes, the radio expansion module 310 ranks the available communication modes (step 515). For example, the radio expansion module 310 may rank the communication modes based on cost for a lengthy communication with data that does not need to be secure. For data that needs to be secure, the controller 305 may rule out the use of an unsecured WiFi communication mode. The controller 305 then selects the highest ranked mode and attempts to connect to the remote system 210 (step 520).

If a connection is made (step 525), the radio expansion module 310 executes the communication (step 530). If the radio expansion module 310 is unable to connect to the remote system 210 via the chosen communication mode (step 525), the radio expansion module 310 determines if another acceptable communication mode is available (step 535); and if there is, attempts to connect to the remote system 210 using the next highest ranked available mode (step 520). If no other acceptable mode is available, the radio expansion module 310 either attempts to connect with a previously attempted mode or exits (step 540) the process. In some constructions, when a connection cannot be made, the radio expansion module 310 provides an alarm indication (e.g., to a driver who can then perform a corrective procedure). In some constructions, when a connection cannot be made, the radio expansion module 310 stores data and forwards the data once a reliable connection is available.

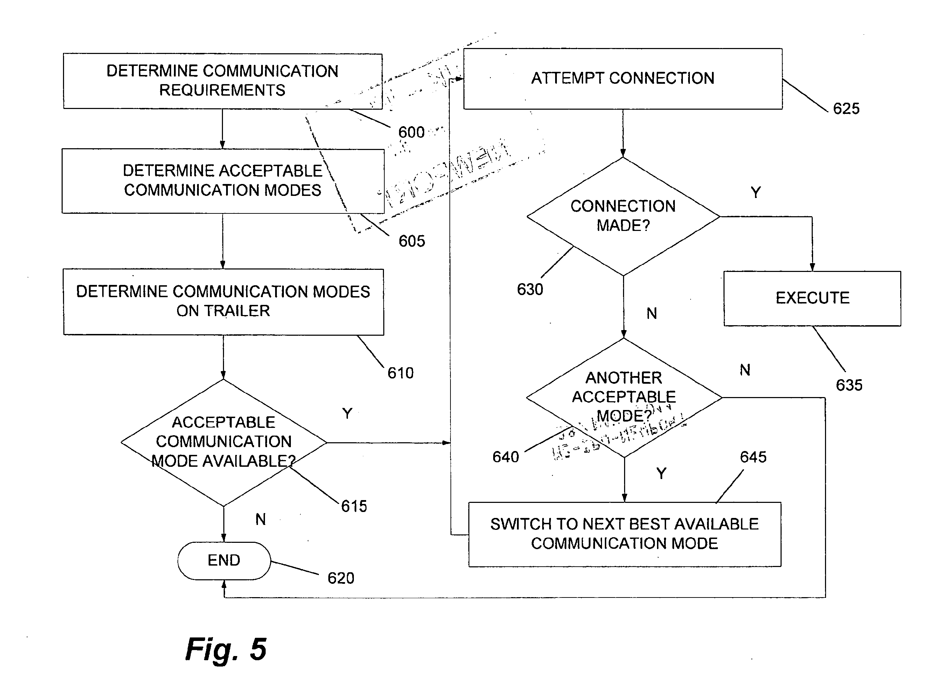

Fig. 5 shows an operation for a central office (i.e., the remote system 210) initiating communication with a refrigerated trailer 205 (e.g., to receive a status update or to modify a temperature set point). The system 210 analyzes the communication that is taking place (step 600). For instance, the system 210 determines if the communication includes sensitive data, the size of the communication packets, how important the data is, etc. Based on the communication taking place, the system 210 then ranks the available communication modes (step 605). For example, the system 210 may rank the communication modes based on cost for a lengthy communication with data that does not need to be secure. For data that needs to be secured, the system 210 may rule out the use of an unsecured WiFi communication mode. For downloading a new program to the trailer 205, where data loss must be prevented, the system 210 may rank the communication modes based on the integrity of the mode. Once the communication modes are ranked for the pending communication, the system 210 determines what communication modes are available on the trailer 205 that it is attempting to communicate with (step 610). The system 210 then determines if any of the available communication modes are acceptable (step 615). If there are no acceptable communication modes available, the system 210 ends the process (step 620). If one or more acceptable communication modes are available, the system 210 selects the highest ranked mode that the trailer 205 supports, and attempts to connect to the trailer 205 (step 625).

If a connection is made (step 630), the system 210 executes the communication (step 635). If the system 210 is unable to connect to the trailer 205 via the chosen communication mode (step 640), the system 210 determines if there is another acceptable communication mode (step 645), and if there is, attempts to connect to the trailer 205 using the next highest ranked available mode (step 625). If no other acceptable mode is available, the system 210 either attempts to connect with a previously attempted mode or exits the process (step 620). In a case where a connection cannot be made, the system 210 may provide an alarm indication to a user who can then attempt to contact the driver or execute another procedure.

Thus, the invention provides, among other things, a new and useful configurable communication system for refrigerated containers. Various features and advantages of the invention are set forth in the following claims.

## Claims

1. A communication system for a climate-controlled container, the system comprising:
a controller coupled to the climate-controlled container and configured to monitor a status of the refrigerated container; and
a radio expansion module removably connected to the controller and configured to support a communication mode, the radio expansion module configured to communicate the status to a remote system;
wherein a communication mode used to communicate with the remote system is determined by the radio expansion module_based on the communication modes supported by the radio expansion module.

2. The system of claim 1, wherein the radio expansion module includes a plurality of different communication modes.

3. The system of claim 2, wherein the radio expansion module_selects which of the plurality of different communication modes to use based on at least one of cost of the communication mode, security of the communication mode, signal strength of the communication mode, and signal integrity of the communication mode.

4. The system of claim 1, wherein the communication mode includes at least one of cellular, satellite, WiFi, wreless personal area network, and radio frequency; and/or
wherein the radio expansion module includes a third-party telematics connection.

5. The system of any preceding claim, wherein the controller communicates, via the radio expansion module, with a personal area network.

6. The system of claim 5, wherein the radio expansion module receives a status of at least one of the refrigerated container and a vehicle via the personal area network.

7. The system of any preceding claim, wherein the controller executes a first program, receives a second program from the remote system, stores the second program in a memory, and executes the second program, the second program replacing the first program; and/or
wherein the radio expansion module is connected to a sensor of the climate-controlled container, the radio control module receiving an indication of a status of the climate-controlled container from the sensor.

8. A communication system, the system comprising:
a controller coupled to a device to be monitored, the controller configured to monitor a status of the device; and
a first radio expansion module configured to be removably connected to the controller, the first radio expansion module configured to communicate the status to a remote system via a first communication mode;
a second radio expansion module configured to be removably connected to the controller, the second radio expansion module configured to communicate the status to the remote system via a second communication mode.

9. The communication system of claim 8, wherein the second communication mode is different than the first communication mode; and/or
wherein the first and second radio expansion modules are configured to support three or more communication modes; and/or
wherein at least one communication mode supported by the first radio expansion module is not supported by the second radio expansion module; and/or
wherein at least one communication mode supported by the second radio expansion module is not supported by the first radio expansion module.

10. A method of communicating by a communication controller with a remote system, the method comprising:
connecting to a removable radio expansion module populated with a plurality of circuits for communicating, each of the plurality of circuits providing a different communication mode;
obtaining data from a device external to the communication controller;
determining a communication mode to use to send the data to the remote system; and
sending the data to the remote system via the radio expansion module using the determined communication mode.

11. The method of claim 10, further comprising connecting to a second radio expansion module mounted in place of the radio expansion module.

12. The method of claim 11, wherein the sending the data to the remote system is performed via the second radio expansion module; and/or
wherein the second radio expansion module supports at least one communication mode different from a communication mode supported by the radio expansion module.

13. The method of claim 10, receiving a new program from the remote system, a controller replacing an existing program with the new program.

14. A communication system for a climate-controlled container, the system comprising:
a controller coupled to the climate-controlled container and configured to monitor a status of the refrigerated container; and
a radio expansion module removably connected to the controller and configured to support a plurality of communication modes including at least two of cellular, satellite, and WiFi, the radio expansion module configured to communicate the status to a remote system;
wherein when a WiFi communication link is available and the radio expansion module is configured to support a WiFi communication mode, the controller communicates with the remote system via a WiFi communication link;
wherein when a WiFi communication link is not available or the radio expansion board is not configured to support a WiFi communication mode and a cellular communication link is available and the radio expansion board is configured to support a cellular communication mode, the controller communicates with the remote system via a cellular communication.

15. The system of claim 14, wherein when a WiFi communication link is not available and a cellular communication link is not available and the radio expansion board is configured to support a satellite communication mode, the controller communicates with the remote system via a satellite communication link; and/or
wherein the controller executes a first program, receives a second program from the remote system, stores the second program in a memory, and executes the second program, the second program replacing the first program.
